Europäisches Patentamt

European Patent Office

Office européen des brevets

(11) Veröffentlichungsnummer: **0 386 534**
**A1**

(12) **EUROPÄISCHE PATENTANMELDUNG**

(21) Anmeldenummer: 90103391.0

(22) Anmeldetag: 22.02.90

(51) Int. Cl.5: **H01F 1/11, G11B 5/706, G06K 19/08**

(30) Priorität: 07.03.89 DE 3907220

(43) Veröffentlichungstag der Anmeldung:
12.09.90 Patentblatt 90/37

(84) Benannte Vertragsstaaten:
**DE FR GB IT NL**

(71) Anmelder: **BAYER AG**

**D-5090 Leverkusen 1 Bayerwerk(DE)**

(72) Erfinder: **Eiling, Aloys, Dr.**
**Schmiedstrasse 12**
**D-4630 Bochum 6(DE)**
Erfinder: **Meisen, Ulrich, Dr.**
**Breslauerstrasse 3**
**D-4150 Krefeld 11(DE)**

(54) **Feinteilige magnetische Hexaferrite mit negativer temperaturabhängiger Koerzitivkraft sowie deren Verwendung.**

(57) Die vorliegende Erfindung betrifft feinteilige magnetische Hexaferritpigmente der allgemeinen Zusammensetzung

$$M(I)_x M(II)_y M(III)_z Fe_{12-(y+z)})O_{19}$$

wobei

$0,5 <\, = x < 1,3,\ 0,1 <\, = (y+z) <\, = 3,\ (x+y+z) >\, = 1,0$ und

$0,0 <\, = y <\, = 1,5$

$0,0 <\, = z <\, = 1,5$

und

M(I): Ba, Sr, Pb, Ca,

M(II): Ti, Zr, Hf, V, Nb, Ta, Mo, W, Sb,

M(III): Co, Zn, Mn bedeuten,

sowie deren Verwendung.

EP 0 386 534 A1

## Feinteilige magnetische Hexaferrite mit negativer temperaturabhängiger Koerzitivkraft sowie deren Verwendung

Die vorliegende Erfindung betrifft feinteilige magnetische Hexaferritpigmente der allgemeinen Zusammensetzung

$M(I)_x M(II)_y M(III)_z Fe_{12-(y+z)})O_{19}$

wobei

$0,5 < = x < 1,3$, $0,1 < = (y+z) < = 3$, $(x+y+z) > = 1,0$

und

$0,0 < = y < = 1,5$

$0,0 < = z < = 1,5$

und

M(I): Ba, Sr, Pb, Ca,

M(II): Ti, Zr, Hf, V, Nb, Ta, Mo, W, Sb,

M(III): Co, Zn, Mn bedeuten,

sowie deren Verwendung.

Hexaferrite weisen Koerzitivfeldstärken auf, wie sie für die hochdichte magnetische Speicherung benötigt werden (45 - 120 kA/m). Insbesondere zeichnen sich durch eine durch Metalldotierung variabel einstellbare Koerzitivkraft ($iH_c$) im Bereich von 500-5500 Oe (39.785-437.6 kA/m) aus. Sie sind Metallpigmenten in ihrer Korrosionsstabilität und $CrO_2$ und Co-dotierten Eisenoxidpigmenten in ihrer Thermostabilität überlegen. Derartige Hexaferritpigmente mit Magnetoplumbit (M)-Struktur wurden für oben genannte Zwecke vorgeschlagen.

In der DE-A 3 732 116 wird beispielsweise die Verwendung eines Strontiumferrits zur Herstellung von Siebdruckfarben, die ein Bindemittel und ein magnetisierbares Pigment enthalten, beschrieben.

Für die Anwendung in Sicherheitsmarkierungen, beispielsweise auf Scheckkarten oder Banknoten, werden feinteilige gut dispergierbare magnetische Materialien benötigt, die eine derart hohe Koerzitivkraft aufweisen, daß sie durch üblicher Permanentmagnete nicht gelöst werden können.

Für handelsübliche Tickets, beispielsweise Fahrkarten, werden derzeit konventionelle magnetische Eisenoxide eingesetzt. Derartige Produkte sind jedoch aufgrund ihrer geringen Koerzitivkraft leicht mit kommerziell erhältlichen Permanentmagneten zu fälschen.

Für fälschungssichere magnetische Medien wird die Verwendung gemahlener Hartferrite in den DE-A 3 630 113 und DE-A 3 732 116 vorgeschlagen. Derartige Produkte weisen jedoch eine sehr breite Teilchengrößenverteilung auf. Sie bestehen teilweise aus derart großen Teilchen, daß die Größe von magnetischen Eindomänen überschritten wird. Das hat zur Folge, daß die Koerzitivkraft sinkt und ein aufgezeichnetes Signal verzerrt wiedergegeben wird. Weiterhin sind derart große Materialien nur sehr schwer und unter hohen Kosten (bedingt durch lange Mahldauer bei der Lackherstellung) zu verarbeiten.

Zur Herstellung von Banknoten mit feinen aufgedruckten magnetischen Wasserzeichen sind die bekannten Hartferrite aufgrund ihrer zu hohen mittleren Teilchengröße ungeeignet. Es ist deshalb Ziel der Erfindung, Bariumferrite zur Verfügung zu stellen, die die beschriebenen Nachteile nicht aufweisen.

Überraschenderweise konnten nun Hexaferrite bereitgestellt werden, die die beschriebene Nachteile nicht aufweisen.

Gegenstand dieser Erfindung sind eine feinteilige magnetisch Hexaferrite der Zusammensetzung

$M(I)_x M(II)_y M(III)_z Fe_{12-(y+z)}O_{19}$

wobei

$0,5 < = x < 1,3$, $0,1 < = (y+z) < = 3$, $(x+y+z) > = 1,0$

und

$0,0 < = y < = 1,5$

$0,0 < = z < = 1,5$

und

M(I): Ba, Sr, Pb, Ca,

M(II): Ti, Zr, Hf, V, Nb, Ta, Mo, W, Sb,

M(III): Co, Zn, Mn,

dadurch gekennzeichnet, daß sie eine Temperaturabhängigkeit der Koerzitivkraft ($iH_c$) von -320 bis 0 A/m/° C im Bereich von 20-100° C aufweist.

In einer besonders bevorzugten Ausführungsform der vorliegenden Erfindungen bedeutet M(II) Mo und M(III) Co. Ebenso bevorzugt kann anstelle des Mo V treten. Eine weitere bevorzugte Ausführungsform ist dadurch gekennzeichnet, daß M(II) Sb und M(III) Zn bedeuten. Ebenso bevorzugt ist die Kombination M(II) Ti und M(III) Mn.

Die erfindungsgemäßen Hexaferrite sind nach bekannten Verfahren herstellbar, z.B. nach der EP-A 230 505.

Gegenstand dieser Erfindung ist auch somit insbesondere die Verwendung dieser Hexaferritpigmente in magnetischen Aufzeichnungsträgern. Ebenso können sie für schwer löschbare magnetische Markierungen und Banknoten verwendet werden.

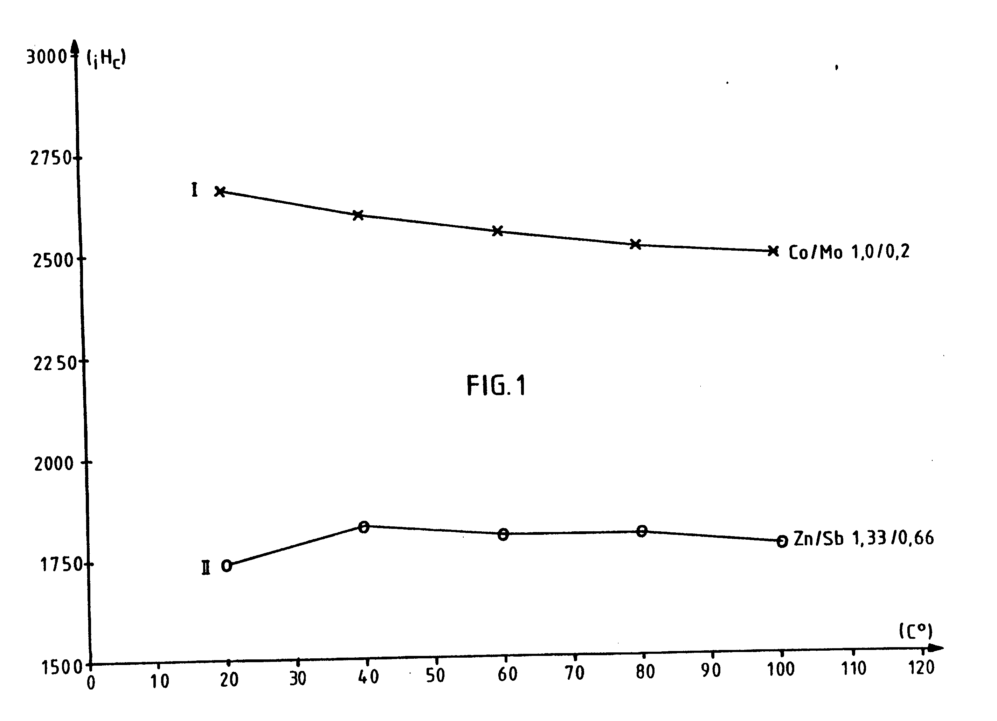

In Fig. 1 ist der Verlauf der Koerzitivkraft in Abhängigkeit von der Temperatur eines Bariumferrits der Zusammensetzung

$$Ba_{1,1}Co_{1,0}Mo_{0,2}Fe_{10,75}O_{19} \qquad (I)$$

und die Temperaturabhängigkeit der $iH_c$ eines Bariumferrites der Zusammensetzung

$$Ba_{1,1}ZnO_{1,0}Sb_{0,5}Fe_{10,5}O_{19} \qquad )II)$$

dargestellt.

Die folgenden Beispiele sollen die Erfindung verdeutlichen, ohne sie jedoch einzuschränken, insbesondere wird der Fachmann durch Variation der Menge und der Art der Metallionen und der Herstellungsbedingungen im Rahmen dieser Erfindung jede gewünschte Zusammensetzung mühelos erhalten können.

Beispiele

Beispiel 1

$$Ba_{1,1}Co_{1,0}Mo_{0,2}Fe_{10,75}O_{19}$$

| Nr. | NH$_4$Fe Citrat | NH4 Molybdat | BaCO$_3$ | CoCO$_3$ | Citronensäure | Ethandiol |
|---|---|---|---|---|---|---|
| 1 | 1122.0 | 13.08 | 43.02 | 62.55 | 107.55 | 121.4 |

alle Angaben in Gramm
NH$_4$-Molybdat (54,3 % Mo), CoCO$_3$ (46,4 % Co), NH$_4$FeCitrat (9,96 % Fe) alle anderen Chemikalien: Chemisch rein

Das Ammoniumeisencitrat wird in 1,2 l Wasser gelöst, die Lösung auf 80°C unter Rühren aufgeheizt und Co-CO$_3$, BaCO$_3$, Citronensäure, NH$_4$-molybdat und Ethandiol werden zugegeben. Dann wird eine Stunde bei 80°C gerührt und am Rotationsverdampfer so weit eingeengt, daß der Eisengehalt der Lösung 10 % beträgt. Die eingeengte Lösung wird in einem Kammerofen bei 220°C unter Luftzutritt getrocknet und pyrolysiert. Das Produkt wird in zwei Teile geteilt und bei 825°C 105' (/A) und bei 875°C (/B) in einem Drehrohrofen geglüht. Der hierbei entstehende hexagonale Ferrit hatte folgende Eigenschaften:

| Nr. | $_iH_c$ (kA/m) | Ms/rho (nTm$^3$/g) | Mr/rho (nTm$^3$/g) | T-Abhängigkeit (A/m/K) |
|---|---|---|---|---|
| 1 | 195.3 | 73.4 | 34.1 | -163.9 |

Beispiel 2

$$Ba_{1,1}Zn_{1,0}Sb_{0,5}Fe_{10,5}O_{19}$$

| Nr. | NH$_4$Fe Citrat | Zn-Citrat | BaCO$_3$ | Sb-citrat | Citronensäure | Ethandiol |
|-----|-----------------|-----------|----------|-----------|---------------|-----------|
| 2 | 1122.0 | 145.38 | 41.49 | 168.13 | 39.64 | 121.4 |
| Zn-Citrat (8.57 % Zn), Sb-Citrat (6.90 % Sb) | | | | | | |

Die Herstellung erfolgt wie im Beispiel 1.
Der hierbei entstehende hexagonale Ferrit hatte folgende Eigenschaften:

| Nr. | iH$_C$ (kA/m) | Ms/rho (nTm$^3$/g) | Mr/rho (nTm$^3$/g) | T-Abhängigkeit (A/m/K) |
|-----|---------------|--------------------|--------------------|------------------------|
| 2 | 138.8 | 68.2 | 32.4 | -74.0 |

Beispiel 3

$Ba_{1,1}Mn_{0,6}Ti_{0,6}Fe_{10,8}O_{19}$

| Nr. | NH$_4$Fe Citrat | Mn Citrat | BaCO$_3$ | Ti Citrat | Citronensäure | Ethandiol |
|-----|-----------------|-----------|----------|-----------|---------------|-----------|
| 3 | 1122,0 | 158.27 | 40.38 | 62.60 | 39.64 | 121,4 |
| Mn-Citrat (3,85 % Mn), Ti-Citrat (8,52 % Ti) | | | | | | |

Die Herstellung erfolgte wie im Beispiel 1
Die hierbei entstehende hexagonale Ferrit hatte folgende Eigenschaften:

| Nr. | $_iH_c$ (kA/m) | Ms/rho (nTm$^3$/g) | Mr/rho (nTm$^3$/g) | T-Abhängigkeit (A/m/K) |
|-----|----------------|--------------------|--------------------|------------------------|
| 3 | 328.9 | 68.0 | 34.9 | -74.0 |

Beispiel 4

$Ba_{1,1}Co_{1,33}V_{0,66}Fe_{10,01}O_{19}$

| Nr. | NH$_4$Fe Citrat | CoCO$_3$ | BaCO$_3$ | NH$_4$VO$_3$ | Citronensäure | Ethandiol |
|-----|-----------------|----------|----------|--------------|---------------|-----------|
| 4 | 1122,0 | 35,85 | 43,52 | 15,59 | 118,0 | 121,4 |
| CoCO$_3$ (46,4 % Co) | | | | | | |

Die Herstellung erfolgt wie im Beispiel 1

4

Der hierbei entstehende hexagonale Ferrit hatte folgende Eigenschaften:

| Nr. | $_iH_c$ (kA/m) | Ms/rho $(nTm^3/g)$ | Mr/rho $(nTm^3/g)$ | T-Abhängigkeit (A/m/K) |
|---|---|---|---|---|
| 4 | 123,6 | 55,9 | 26,7 | -280,9 |

## Ansprüche

1. Feinteilige magnetische Hexaferrite der Zusammensetzung:
$M(I)_xM(II)_yM(III)_zFe_{12-(y+z)})O_{19}$ wobei
$0,5 <= x <= 0\ 1,3,\ 0,1 <= (y+z) <= 3,\ (x + y + z) >= 1,0$ und
$0,0 <= y <= 1,5$
$0,0 <= z <= 1,5$
und
M(I): Ba, Sr, Pb, Ca,
M(II): Ti, Zr, Hf, V, Nb, Ta, Mo, W, Sb,
M(III): Co, Zn, Mn
dadurch gekennzeichnet, daß sie eine Temperaturabhängigkeit der Koerzitivkraft ($iH_c$) von -320 bis 0 A/m/°C im Bereich von 20 - 100°C aufweisen.

2. Feinteilige magnetische Hexaferrite gemäß Anspruch 1, dadurch gekennzeichnet, daß M(II) Mo und M(III) Co bedeuten.

3. Feinteilige magnetische Hexaferrite gemäß Anspruch 1, dadurch gekennzeichnet, daß M(II) V und M-(III) Co bedeuten.

4. Feinteilige magnetische Hexaferrite gemäß Anspruch 1, dadurch gekennzeichnet, daß M(II) Sb und M(III) Zn bedeuten.

5. Feinteilige magnetische Hexaferrite gemäß Anspruch 1, dadurch gekennzeichnet, daß M(II) Ti und M-(III) Mn bedeuten.

6. Verwendung der magnetischen Hexaferrite gemäß einem oder mehrerer der Ansprüche 1 bis 5 für schwer löschbare magnetische Markierungen und Banknoten.

7. Verwendung der magnetischen Hexaferritpigmente gemäß einem oder mehrerer der Ansprüche 1 bis 5 als magnetisches Aufzeichnungsmaterial.

FIG.1

EP 0 386 534 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 290 263 (MATSUSHITA ELECTRIC IND. CO. LTD) * Ansprüche 6,7,9,11; Seite 4, Zeilen 31-38; Seite 7, Beispiel 16 * --- | 1,5,7 | H 01 F 1/11 G 11 B 5/706 G 06 K 19/08 |
| A | EP-A-0 273 748 (TODA KOGYO CORP.) * Anspruch 1 * --- | 1,7 | |
| A | PATENT ABSTRACTS OF JAPAN, Band 13, Nr. 72 (C-570)[3420], 17. Februar 1989; & JP-A-63 265 830 (UBE IND. LTD) 02-11-1988 --- | 1,7 | |
| A | EP-A-0 300 310 (BAYER AG) * Ansprüche 1,7; Spalte 2, Zeilen 14-22 * ----- | 1,6,7 | |

| | RECHERCHIERTE SACHGEBIETE (Int. Cl.5) |
|---|---|
| | H 01 F G 11 B |

Der vorliegende Recherchenbericht wurde für alle Patentansprüche erstellt

| Recherchenort | Abschlußdatum der Recherche | Prüfer |
|---|---|---|
| DEN HAAG | 18-05-1990 | DECANNIERE L.J. |